# EUROPÄISCHE PATENTSCHRIFT

(11) **EP 2 213 064 B1**
(45) Veröffentlichungstag und Bekanntmachung des Hinweises auf die Patenterteilung: **21.01.2015**
(21) Anmeldenummer: 08802634.9
(22) Anmeldetag: 25.09.2008
(51) Int. Cl.: H04L 29/06, H04W 12/08

(54) **VERFAHREN ZUM ZUGANG ZU GESCHLOSSENEN GRUPPEN IN RADIOZUGANGSNETZEN**
METHOD FOR ACCESSING CLOSED GROUPS IN RADIO ACCESS NETWORKS
PROCÉDÉ POUR ACCÉDER À DES GROUPES FERMÉS DANS DES RÉSEAUX D'ACCÈS RADIO

(30) Priorität: 23.11.2007 DE 102007056788
(43) Veröffentlichungstag der Anmeldung: 04.08.2010
(73) Patentinhaber: Deutsche Telekom AG, 53113 Bonn (DE)
(72) Erfinder: JACOBSOHN, Dieter, 53229 Bonn (DE); KIRSCH, Maik, 53757 Sankt Augustin (DE); SPEICHER, Sebastian, 53225 Bonn (DE)
(74) Vertreter: Cohausz Hannig Borkowski Wißgott
(86) Internationale Anmeldenummer: PCT/EP2008/008174
(87) Internationale Veröffentlichungsnummer: WO 2009/065460

(56) Entgegenhaltungen:
- WO-A1-01/06799
- US-A1- 2007 054 668

## Beschreibung

Die Erfindung betrifft ein Verfahren zur Herstellung einer Funkverbindung zwischen einem nicht autorisierten Mobilfunkendgerät und einer Basisstation eines Mobilfunknetzwerkes, wobei für eine Nutzung der Basisstation als Zugang zu dem Mobilfunknetzwerk eine Autorisierung des Mobilfunkendgerätes erforderlich ist.

Standardisierte Mechanismen zur Funkverbindungszuweisung verhindern einen unkontrollierten Zugang zu Funknetzzugangspunkten, die nur für geschlossene Gruppen freigegeben sind. Stand der Technik ist, dass über das bestehende Makrozellnetz, d.h. z.B. über benachbarte für ein Mobilfunkendgerät nicht geschlossene Funknetzzugangspunkte mit evtl. größerer Reichweite, dem Mobilfunkendgerät die erlaubten Zugangspunkte mitgeteilt werden und dass diese im Mobilfunkendgerät (oder in dem darin ggf. enthaltenen Subscriber Identity Module (SIM)) gespeichert werden.

Im Falle von nicht vorhandener Makrozellenversorgung besteht keine Verbindung zwischen dem Mobilfunkendgerät und dem Mobilfunknetz, so dass auch eine entsprechende Zuordnung, d.h. Mitteilung der erlaubten Zugangspunkte, nicht stattfinden kann.

Aus der Schrift WO 01/06799 A1 ist eine Zugangssteuerung für einen lokalen Dienst bekannt, wobei der Zugang zu besagtem Dienst erlaubt wird, wenn ein

Mobilfunkendgerät bestimmte Gastkriterien erfüllt, insbesondere wenn das Endgerät innerhalb einer bestimmten geografischen Region befindlich ist oder dem Dienst anhand seiner Besucherrufnummer bekannt ist. Dies bedeutet, dass ein "Gast" faktisch ein registrierter Benutzer sein muss. Ist er dies nicht, kann er den Dienst nicht benutzen.

Die Schrift US 2007/054668 A1 beschreibt ein Update der Datenbank einer privaten Basisstation (PBS) wobei eine Mobilfunknummer eines autorisierten Benutzers dieser Datenbank hinzugefügt werden kann. Dies bedeutet, dass eine permanente Autorisierung dieses Benutzers in der Datenbank vorgenommen wird, und dass zweitens eine Autorisierung des nicht autorisierten Endgerätes dann vorgenommen wird, wenn das autorisierte Endgerät respektive dessen Benutzer sie einrichtet. Die US 2007/054668 A1 betrifft ferner die Aktualisierung und Wartung einer privaten Basisstation durch seinen Besitzer mittels eines Callcenter, mit dem der Besitzer einen Dialog zur Hinterlegung einer neuen Rufnummer in der Datenbank führen muss.

Die Aufgabe der Erfindung ist es, ein Verfahren zur Verfügung zu stellen, durch das es ermöglicht wird, ein Mobilfunkendgerät in Funknetzzugangspunkte, d.h. insbesondere Basisstationen eines Mobilfunknetzes, einbuchen zu können, um einen Zugang zu dem Mobilfunknetzwerk zu ermöglichen, auch wenn aktuell keine Verbindung zwischen dem Mobilfunkendgerät und dem Mobilfunknetz besteht.

Diese Aufgabe wird erfindungsgemäß durch ein Verfahren gemäß Anspruch 1 gelöst.

Hierdurch ist es möglich, auch mit einem an sich nicht autorisierten Mobilfunkendgerät eine vorhandene Basisstation mit einem eingeschränkten Zugang als Zugang zu einem Mobilfunknetzwerk zu benutzen. Erforderlich ist hierzu eine entsprechende temporäre und/oder manuelle Autorisierung beispielsweise eines Besuchers durch den Eigentümer oder Hauptnutzer oder Administrator der Basisstation.

Die Freigabe ist erforderlich, da das eigentlich nicht autorisierte Mobilfunkendgerät z.B. eines Besuchers in dem Bereich aufgrund der Tatsache, dass die in dem Bereich vorhandene Basisstation in dem Mobilfunkendgerät nicht als zulässiger Zugangspunkt zu dem Mobilfunknetzwerk abgespeichert ist, nicht von dem Mobilfunkendgerät als Einwahlpunkt gewählt würde, d.h. dass das Mobilfunkendgerät es nicht versuchen würde, sich in die vorhandene Basisstation als Zugangspunkt zu dem Mobilfunknetzwerk, zu dem aktuell keine Funkverbindung besteht, einzubuchen. Nach einer temporären und/oder manuellen Freigabe, d.h. Autorisierung eines weiteren Mobilfunkendgerätes ist es jedoch möglich, dieses weitere Mobilfunkendgerät in die Basisstation einzubuchen und die Basisstation als Zugangspunkt zu einem Mobilfunknetzwerk zu benutzen.

Weitere vorteilhafte Ausgestaltungen der Erfindung sind in den Unteransprüchen angegeben.

Vorzugsweise wird eine temporäre oder generelle Zugangsautorisierung innerhalb eines autorisierten Mobilfunkendgerätes abgespeichert, insbesondere kann innerhalb des autorisierten Mobilfunkendgerätes die Kennung der Basisstation abgespeichert werden, wodurch es ermöglicht wird, dass das autorisierte Mobilfunkendgerät einen Einbuchungsversuch startet, sobald es in Reichweite der Basisstation ist.

Es ist möglich, dass die temporäre und/oder manuelle Autorisierung eines zweiten Mobilfunkendgerätes durch Übermittlung einer Autorisierungsmitteilung von einem autorisierten Mobilfunkendgerät an das Mobilfunknetz erfolgt.

Hierdurch ist es möglich, dass beispielsweise seitens des Eigentümers oder Hauptnutzers oder eines Administrators einer Basisstation durch Bestätigung an einem autorisierten Mobilfunkendgerät und Übermittlung einer derartigen Bestätigungsmitteilung an das Mobilfunknetz eine temporäre und/oder manuelle Freigabe für ein weiteres an sich nicht autorisiertes Mobilfunkendgerät erfolgen kann.

Vorzugsweise löst ein Einbuchungsversuch und/oder Verbindungsaufbauversuch von einem nicht autorisierten Mobilfunkendgerät bei der Basisstation die Anforderung einer Autorisierungsmitteilung und/oder einer manuellen Autorisierung aus, indem eine entsprechende Meldung durch die Basisstation erzeugt wird. Dadurch ist es möglich, ausgehend von einem nicht autorisierten Mobilfunkendgerät bei der Basisstation die Freigabe anzufordern.

Eine Identifikation von generell oder temporär autorisierten Mobilfunkendgeräten kann z.B. mittels der MSISDN erfolgen. Es ist möglich, dass Identifikationen von generell oder temporär autorisierten Mobilfunkendgeräten in der Basisstation und/oder im Mobilfunknetz abgespeichert werden.

Zwei Ausführungsbeispiele des erfindungsgemäßen Verfahrens sind in den Figuren dargestellt und werden nachfolgend erläutert. Es zeigen:
- Fig. 1: Eine schematische Darstellung des Einbuchens eines Mobilfunkendgerätes in eine Basisstation mit eingeschränktem Zugang nach einer ersten Ausführungsform;
- Fig. 2: eine schematische Darstellung des Einbuchens eines Mobilfunkendgerätes in eine Basisstation mit eingeschränktem Zugang nach einer zweiten Ausführungsform;

In den Figuren dargestellt sind zwei Varianten des Einbuchens eines Mobilfunkendgerätes in eine Basisstation mit eingeschränktem Zugang zum Aufbau einer Verbindung zu einem Mobilfunknetzwerk in einem Bereich ohne eine ausreichende, d.h. über die Basisstation mit eingeschränktem Zugang hinausgehende Netzabdeckung.

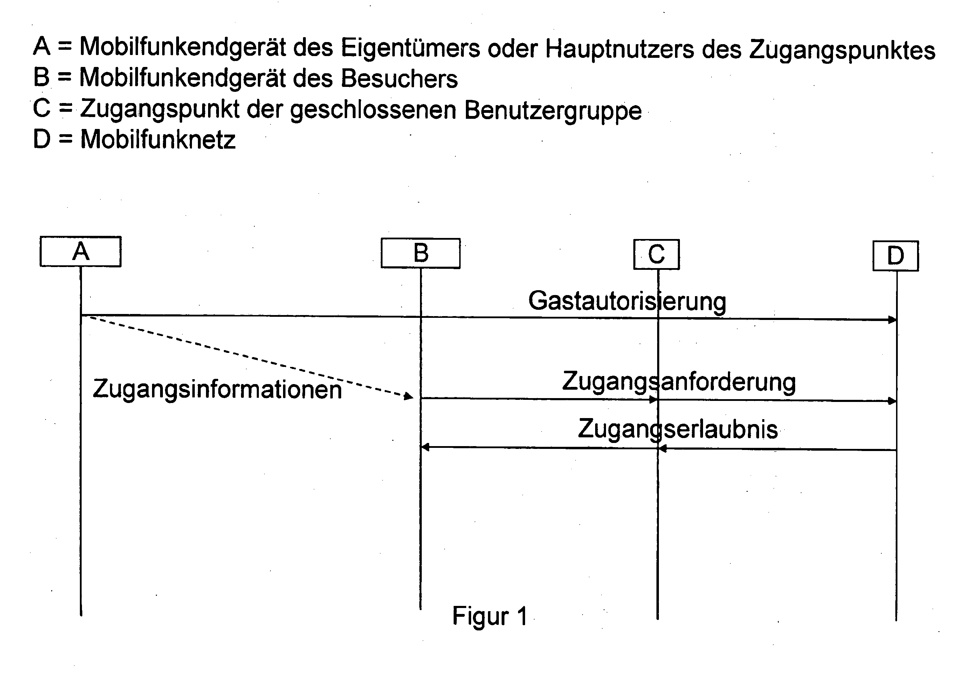

In einer ersten Ausführungsform des Verfahrens wird die Zuordnung der erlaubten Zugangspunkte in einem zweiteiligen Prozess gemäß Figur 1 durchgeführt:
1. Autorisierung des besuchenden Mobilfunkgerätes (B) durch den Eigentümer oder Hauptnutzer oder eines Administrator des Zugangspunktes mittels des Mobilfunkendgerätes (A) des Eigentümers oder Hauptnutzers oder Administrators.
2. Einbuchung des besuchenden Mobilfunkgerätes (B) über den besuchten Zugangsknoten (C) in das Mobilfunknetz (D)

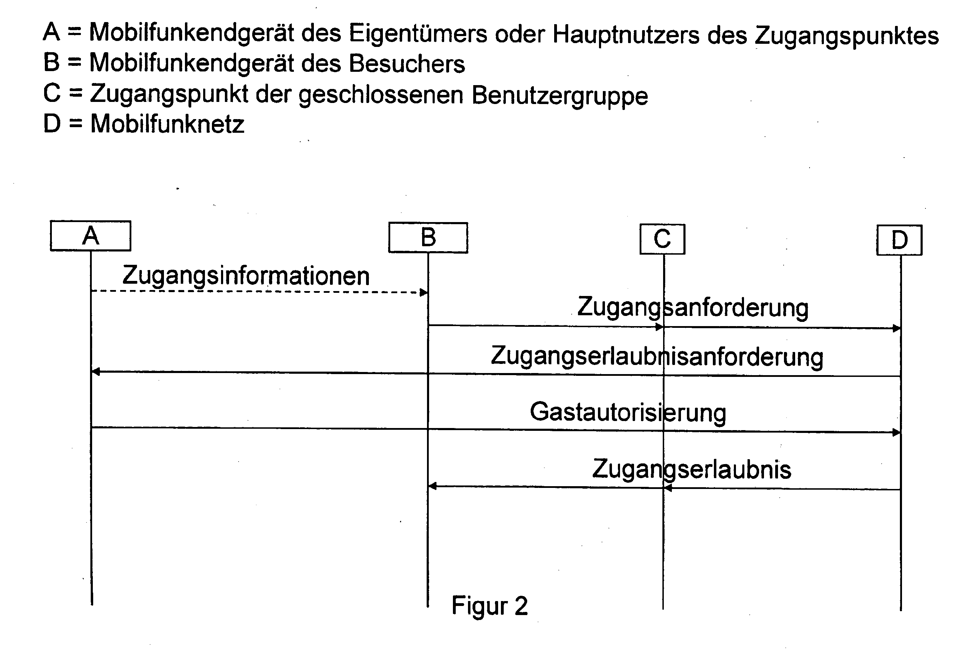

Eine alternative Lösung besteht aus einem vierstufigen Prozess nach einer zweiten Ausführungsform des erfindungsgemäßen Verfahrens gemäß Figur 2:
1. Einbuchversuch des besuchenden Mobilfunkgerätes (B) über den besuchten Zugangsknoten (C) in das Mobilfunknetz (D).
2. Autorisierungsanfrage für den besuchenden Mobilfunkteilnehmer (B) beim Eigentümer oder Hauptnutzer oder Administrator (A) des Zugangspunktes (C).
3. Autorisierung des besuchenden Mobilfunkgerätes (B) durch den Eigentümer oder Hauptnutzer oder Administrator (A) des Zugangspunktes (C).
4. Einbuchung des besuchenden Mobilfunkgerätes (B) über den besuchten Zugangsknoten (C) in das Mobilfunknetz (D).

Die Einbuchung bzw. der Einbuchungsversuch werden auf Basis der vom Eigentümer oder Hauptnutzer oder Administrator bzw. einer Administrationseinheit (A) des Zugangspunktes (C) zu übergebenden Zugangspunktidentifikation durchgeführt.

Alternativ kann diese Zugangspunktidentifikation aus einer im besuchenden Mobilfunkgerät (B) dargestellten Liste der aktuell verfügbaren Zugangspunkte (C) ausgewählt werden.

## Patentansprüche

1. Verfahren zur Herstellung einer Funkverbindung zwischen einem nichtautorisierten Mobilfunkendgerät (B) und einer Basisstation (C) eines Mobilfunknetzwerkes (D), wobei für eine Nutzung der Basisstation (C) als Zugang zu dem Mobilfunknetzwerk (D) eine Autorisierung des Mobilfunkendgerätes (B) erforderlich ist, **dadurch gekennzeichnet, dass** das Mobilfunkendgerät (B) zumindest temporär mittels eines autorisierten Mobilfunkendgeräts (A) autorisiert wird, wobei ein Einbuchungsversuch und/oder Verbindungsaufbauversuch von dem nichtautorisierten Mobilfunkendgerät (B) bei der Basisstation (C) oder dem Mobilfunknetzwerk (D) die Anforderung einer Autorisierungsmitteilung auslöst und eine entsprechende Meldung von der Basisstation (C) oder dem Mobilfunknetzwerk (D) erzeugt und an das autorisierte Mobilfunkendgerät (A) übertragen wird, welches das nichtautorisierte Mobilfunkendgerät (B) autorisiert, indem es eine Autorisierungsmitteilung an das Mobilfunknetzwerk (D) übermittelt, und wobei seitens der Basisstation (C) eine entsprechende Freigabemitteilung an das Mobilfunkendgerät (B) übermittelt und eine Funkverbindung zwischen dem Mobilfunkendgerät (B) und der Basisstation (C) des Mobilfunknetzwerkes (D) aufgebaut wird.

2. Verfahren nach Anspruch 1, **dadurch gekennzeichnet, dass** eine Identifikation von generell oder temporär autorisierten Mobilfunkendgeräten (A, B) mittels der MSISDN erfolgt.

3. Verfahren nach Anspruch 1 oder 2, **dadurch gekennzeichnet, dass** Identifikationen von generell oder temporär autorisierten Mobilfunkendgeräten (A, B) in der Basisstation (C) und/oder im Mobilfunknetz (D) abgespeichert werden.

## Claims

1. Method for establishing a radio link between an unauthorized mobile radio terminal (B) and a base station (C) of a mobile radio network (D), utilization of the base station (C) as access to the mobile radio network (D) requiring an authorization of the mobile radio terminal (B), **characterized in that** the mobile radio terminal (B) is authorized at least temporarily by means of an authorized mobile radio terminal (A), an attempt at registration and/or attempt at setting up a connection by the unauthorized mobile radio terminal (B) triggering at the base station (C) or in the mobile radio network (D) the request of an authorization message and a corresponding message being generated by the base station (C) or the mobile radio network (D) and being transmitted to the authorized mobile radio terminal (A), which authorizes the unauthorized mobile radio terminal (B), **in that** it transmits an authorization message to the mobile radio network (D), and the base station (C) transmitting a corresponding release message to the mobile radio terminal (B) and a radio link being set up between the mobile radio terminal (B) and the base station (C) of the mobile radio network (D).

2. Method according to Claim 1, **characterized in that** an identification of mobile radio terminals (A, B)
authorized generally or temporarily is provided by means of the MSISDN.

3. Method according to Claim 1 or 2, **characterized in that** identifications of mobile radio terminals (A, B) authorized generally or temporarily are stored in the base station (C) and/or in the mobile radio network (D).

## Revendications

1. Procédé d'établissement d'une liaison radio entre un terminal de radiocommunication mobile non autorisé (B) et une station de base (C) d'un réseau de radiocommunication mobile (D), dans lequel une autorisation du terminal de radiocommunication mobile (B) est exigée pour une utilisation de la station de base (C) afin d'accéder au réseau de radiocommunication mobile (D), **caractérisé en ce que** le terminal mobile (B) est autorisé au moins temporairement au moyen d'un terminal de radiocommunication mobile autorisé (A), dans lequel une tentative de connexion et/ou une tentative d'établissement de liaison par le terminal de radiocommunication mobile non autorisé (B) à la station de base (C) ou au réseau de radiocommunication mobile (D) déclenche la demande d'une notification d'autorisation, et un message correspondant est généré par la station de base (C) ou le réseau de radiocommunication mobile (D) et est transmis au terminal de radiocommunication mobile autorisé (A), lequel message autorise le terminal de radiocommunication mobile non autorisé (B) en transmettant une notification d'autorisation au réseau de radiocommunication mobile (D), et dans lequel, du côté de la station de base (C), une notification de libération est transmise au terminal mobile (B) et une liaison radio est établie entre le terminal de radiocommunication mobile (B) et la station de base (C) du réseau de radiocommunication mobile (D).

2. Procédé selon la revendication 1, **caractérisé en ce qu'**une identification de terminaux de radiocommunication mobiles globalement ou temporairement autorisés (A, B) est effectuée au moyen du réseau MSISDN.

3. Procédé selon la revendication 1 ou 2, **caractérisé en ce que** des identifications de terminaux de radiocommunication mobiles globalement ou temporairement autorisés (A, B) sont stockées dans la station de base (C) et/ou dans le réseau de radiocommunication mobile (D).
